# EUROPÄISCHE PATENTANMELDUNG

(11) **EP 3 150 413 A1**
(43) Veröffentlichungstag der Anmeldung: **05.04.2017**
(21) Anmeldenummer: 16191798.4
(22) Anmeldetag: 30.09.2016
(51) Int. Cl.: B60J 5/04

(54) **TÜRMODUL FÜR DEN EINBAU IN EINE KRAFTFAHRZEUGTÜR**

(30) Priorität: 02.10.2015 DE 202015105205 U
(71) Anmelder: Brose Schliesssysteme GmbH & Co. KG, 42369 Wuppertal (DE)
(72) Erfinder: Faust, Rene, 46282 Dorsten (DE); Leve, Dirk, 41470 Neuss (DE)
(74) Vertreter: Gottschald, Jan

(57) **Zusammenfassung**

Die Erfindung betrifft ein Türmodul (1) für den Einbau in eine Kraftfahrzeugtür (2), wobei das Türmodul (1) eine Schlossaufnahme (4) für ein Kraftfahrzeugschloss (5) und eine Fensterführungsschiene (6) für die Führung einer anhebund absenkbaren Fensterscheibe (7) aufweist. Es wird vorgeschlagen, dass das Türmodul (1) im Bereich der Schlossaufnahme (4) eine Stützstruktur (10) mit mindestens einem Stützelement (11) aufweist und dass im eingebauten Zustand eine seitliche Belastung der Fensterführungsschiene (6) durch die Fensterscheibe (7) entlang deren Scheibenfläche (7a) zumindest zum Teil über das Stützelement (11) an einer Stützfläche (14) eines Türinnenblechs (15) der Kraftfahrzeugtür (2) mit einer Abstützkraft (16) am Kraftfahrzeugschloss (5) vorbei abstützbar ist.

## Beschreibung

Die vorliegende Erfindung betrifft ein Türmodul für den Einbau in eine Kraftfahrzeugtür gemäß dem Oberbegriff von Anspruch 1 sowie eine Kraftfahrzeugtür mit einem solchen Türmodul gemäß dem Oberbegriff von Anspruch 13.

Das in Rede stehende Türmodul ist in unterschiedlicher Ausführung aus dem Stand der Technik bekannt. Allen Türmodulen ist gemeinsam, dass sie mindestens eine Funktionseinheit der Kraftfahrzeugtür aufnehmen. Im Rahmen einer Vormontage wird das Türmodul mit den Funktionseinheiten bestückt, so dass das Türmodul zusammen mit den vormontierten Funktionseinheiten in die Kraftfahrzeugtür eingebaut werden kann. Diese Vorgehensweise hat sich in den letzten Jahren im Rahmen der Effizienzsteigerung in der Montage von Kraftfahrzeugtüren durchgesetzt.

Das bekannte Türmodul (DE 20 2009 011 302 U1), von dem die Erfindung ausgeht, dient im Rahmen einer Vormontage ebenfalls der Aufnahme von Funktionseinheiten, nämlich eines Kraftfahrzeugschlosses und eines Lagerbügels. Das Türmodul ist ferner mit einer Fensterführungsschiene ausgestattet, die nur eine Seite einer beidseitigen Fensterführung bereitstellt.

Aufgrund der hohen beim Anheben und Absenken der in der Fensterführungsschiene geführten Fensterscheibe auftretenden Kräfte kommt es zu hohen mechanischen Belastungen der Fensterführungsschiene und meist auch zu einer gewissen elastischen Verformung der beteiligten Komponenten. Dies stellt besondere Anforderungen an die Festlegung der Fensterführungsschiene an der Kraftfahrzeugtür. Bei dem bekannten Türmodul ist die Fensterführungsschiene u. a. durch einen Schraubdom an der Kraftfahrzeugtür festgelegt. Insbesondere die Abstützung einer seitlichen Belastung der Fensterführungsschiene entlang der Fensterfläche und quer zu der Längserstreckung der Fensterführungsschiene ist hier nur eingeschränkt möglich. Eine solche seitliche Belastung geht oftmals auf eine Kippneigung der Fensterscheibe um eine senkrecht zur Scheibenfläche ausgerichtete Kippachse zurück. Eine unzureichende Abstützung kann leicht dazu führen, dass es zu einem Verklemmen der Fensterscheibe in der Fensterführungsschiene kommt, was die Betriebssicherheit der Kraftfahrzeugtür insgesamt beeinträchtigt.

Der Erfindung liegt das Problem zugrunde, das bekannte Türmodul für den Einbau in eine Kraftfahrzeugtür derart auszugestalten und weiterzubilden, dass die Betriebssicherheit der Kraftfahrzeugtür mit einfachen Mitteln gesteigert werden kann.

Das obige Problem wird bei einem Türmodul gemäß dem Oberbegriff von Anspruch 1 durch die Merkmale des kennzeichnenden Teils von Anspruch 1 gelöst.

Wesentlich ist die grundsätzliche Überlegung, dass die Eigenheiten der Einbausituation des Kraftfahrzeugschlosses genutzt werden können, um eine durch die Fensterscheibe verursachte seitliche Belastung der Fensterführungsschiene besser abzustützen.

Die seitliche Belastung der Fensterführungsschiene im vorliegenden Sinne ist entlang der Scheibenfläche der Fensterscheibe ausgerichtet und weist zumindest eine Komponente im Wesentlichen quer zu der Längserstreckung der Fensterführungsschiene auf. Vorzugsweise ist diese seitliche Belastung im Wesentlichen quer zu der Längserstreckung der Fensterführungsschiene ausgerichtet. Der Begriff "im Wesentlichen" trägt hier dem Umstand Rechnung, dass die Längserstreckung der Fensterführungsleiste nicht notwendigerweise genau gerade ist.

Im Einzelnen ist erkannt worden, dass das Kraftfahrzeugschloss an einem Bereich des Türinnenblechs der Kraftfahrzeugtür befestigt ist, der eine hohe mechanische Stabilität aufweist, so dass sich dieser Bereich des Türinnenblechs besonders gut für eine Abstützung der Fensterführungsschiene eignet. Weiter ist erkannt worden, dass der Bereich der Schlossaufhahme zwingend in urunittelbarer Nähe zu dem oben angesprochenen, stabilen Bereich des Türinnenblech angeordnet sein muss. Schließlich ist erkannt worden, dass es ohne Weiteres möglich ist, den Kraftfluss der Abstützkraft am Kraftfahrzeugschloss vorbeizuleiten, so dass mechanisch empfindliche Teile des Kraftfahrzeugschlosses, insbesondere ein Elektrokomponententräger o. dgl. des Kraftfahrzeugschlosses, von der Abstützkraft unbeeinflusst bleiben.

Im Einzelnen wird vorgeschlagen, dass das Türmodul im Bereich der Schlossaufnahme eine Stützstruktur mit mindestens einem Stützelement aufweist, wobei im eingebauten Zustand eine seitliche Belastung der Fensterfiihrungsschiene durch die Fensterscheibe entlang deren Scheibenfläche zumindest zum Teil über das Stütztelement an einer Stützfläche eines Türinnenblechs der Kraftfahrzeugtür mit einer Abstützkraft abstützbar ist, deren Kraftfluss am Kraftfahrzeugschloss vorbeiläuft.

Im Ergebnis wird die Einbausituation des Kraftfahrzeugschlosses optimal für die Abstützung der Fensterführungsschiene genutzt, wobei im Sinne einer kompakten und konstruktiv einfachen Umsetzung Komponenten der Schlossaufnahme doppelt genutzt werden können. Vorschlagsgemäß lassen sich diese Vorteile realisieren, ohne dass das Kraftfahrzeugschloss selbst vom Kraftfluss der Abstützkraft beeinflusst wird.

Die hier in Rede stehende Abstützkraft erstreckt sich gemäß Anspruch 2 im Wesentlichen in Längsrichtung der Kraftfahrzeugtür. Die Längsrichtung erstreckt sich im Wesentlichen quer zu der Anhebe- und Absenk-Bewegungsrichtung der Fensterscheibe. Hierdurch wird klar, dass die vorschlagsgemäße Abstützung einem oben angesprochenen Verklemmen der Fensterscheibe wirksam entgegenwirkt.

Bei der besonders bevorzugten Ausgestaltung gemäß Anspruch 3 stellt die Schlassaufnalnne selbst die vorschlagsgemäße Stützstruktur bereit. Diese Doppelnutzung der Schlossaufnahme, nämlich einerseits zur Aufnahme des Kraftfahrzeugschlosses und andererseits zur Abstützung der Fensterfiihrungsschiene führt zu einer kompakten und einfachen konstruktiven Umsetzung.

Ein Beispiel für die obige Doppelnutzung besteht gemäß Anspruch 4 darin, dass ein Aufnahmeelement, insbesondere eine Aufnahmeschiene, der Schlossaufnahme das Stützelement der Stützstruktur bereitstellt. Dadurch, dass es sich bei einer Aufnahmeschiene regelmäßig um ein längliches Element handelt, kann die Abstützkraft bei geeigneter Auslegung in Längsrichtung der Aufnahmeschiene verlaufen.

Einen Klapperschutz zur Vermeidung von Klappergeräuschen, die auf den Eingriff des Stützelements mit der Stützfläche zurückgehen, lässt sich gemäß Anspruch 7 dadurch erreichen, dass die Eingriffsfläche des Stützelements mit mindestens einer Schicht aus Dämpfungsmaterial ausgestattet ist. Für die Auslegung des Dämpfungsmaterials sind zahlreiche vorteilhafte Varianten denkbar, die insbesondere im Hinblick auf eine kostengünstige Fertigbarkeit hin ausgelegt sind.

Alternativ oder zusätzlich kann es vorgesehen sein, dass bei Ausbleiben einer obigen, seitlichen Belastung der Fensterführungsschiene ein Spalt zwischen der Stützstruktur und der Stützfläche verbleibt (Anspruch 8). Insoweit wird von einer gewissen Elastizität des Türmoduls insgesamt ausgegangen, die dafür sorgt, dass nach einem Wegfall der seitlichen Belastung der Fensterfühmngsschiene, die mit einem kraftschlüssigen Eingriff zwischen Stützstruktur und Stützfläche einhergeht, eine elastische Rückstellung des Türmoduls und damit die Erzeugung des obigen Spaltes einhergeht.

Wiederum alternativ oder zusätzlich kann es gemäß Anspruch 10 vorgesehen sein, dass die Stützstruktur und die Stützfläche in ständigem Eingriff miteinander stehen. Hierfür ist die Stützstruktur mit einem Einfederbereich ausgestattet. Es darf darauf hingewiesen werden, dass es zusätzlich vorgesehen sein kann, dass mindestens ein weiterer Abschnitt der Stützstruktur einen obigen Spalt aufweist, der bei einer seitlichen Belastung der Fensterführungsschiene wie angesprochen geschlossen wird, so dass die vorschlagsgemäße Abstützung erfolgen kann.

Nach einer weiteren Lehre gemäß Anspruch 13, der eigenständige Bedeutung zukommt, wird eine Kraftfahrzeugtür gemäß Anspruch 13 als solche beansprucht.

Die vorschlagsgemäße Kraftfahrzeugtür weist ein Türinnenblech auf, an dem eine Türaußenhaut befestigt ist. Die Kraftfahrzeugtür weist ferner ein vorschlagsgemäßes Türmodul auf, das an dem Türinnenblech befestigt ist. Auf alle Erläuterungen zu dem vorschlagsgemäßen Türmodul, die geeignet sind, die Kraftfahrzeugtür insgesamt zu beschreiben, darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Kraftfahrzeugtür mit einem vorschlagsgemäßen Türmodul gemäß einer ersten Ausführungsform in einer perspektivischen Ansicht in einem teilmontierlen Zustand,
- Fig. 2: die Kraftfahrzeugtür gemäß Fig. 1a) bei vollständig angehobener Fensterscheibe und b) bei vollständig abgesenkter Fensterscheibe jeweils in einer Seitenansicht im teilmontierten Zustand und
- Fig. 3: eine vorschlagsgemäße Kraftfahrzeugtür mit einem vorschlagsgemäßen Türmodul gemäß einer weiteren Ausführungsform in den Ansichten gemäß Fig. 2.

Das vorschlagsgemäße Türmodul 1 ist für den Einbau in einer Kraftfahrzeugtür 2 vorgesehen. Der Begriff "Kraftfahrzeugtür" ist vorliegend weit zu verstehen. Er umfasst Seitentüren, Hecktüren, Heckdeckel, Heckklappen, Motorhauben o. dgl..

Dem Türmodul 1 kommen vorrangig zwei Funktionen zu. Einerseits dient das Türmodul 1 als Vormontagehilfe, wie im einleitenden Teil der Beschreibung erläutert. Andererseits dient das Türmodul 1 der Festlegung mindestens einer Funktionseinheit im eingebauten Zustand, wie noch erläutert wird.

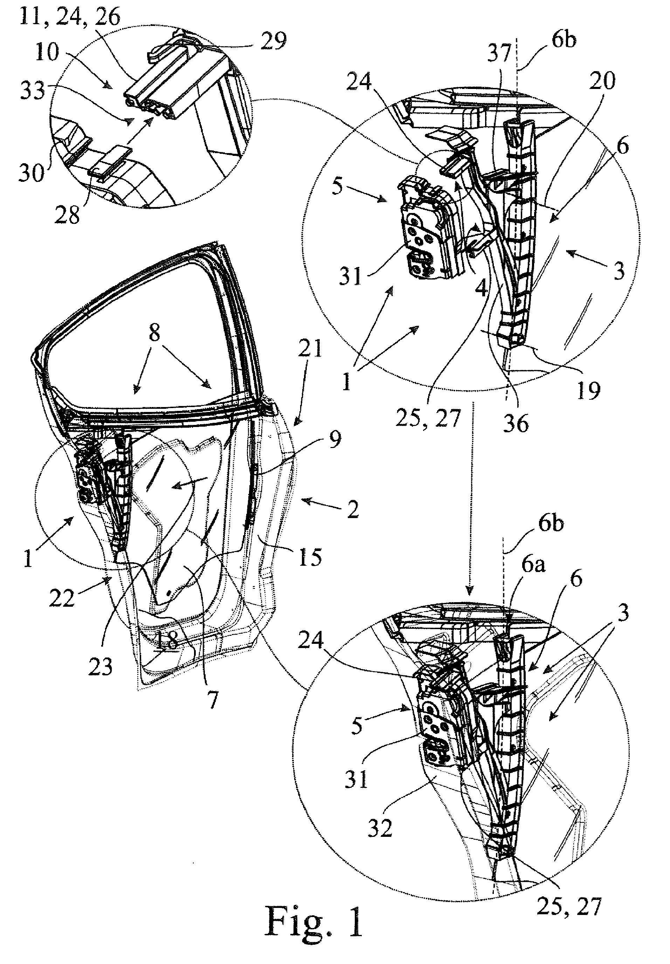

Es lässt sich am besten der Darstellung gemäß Fig. 1 entnehmen, dass das Türmodul 1 eine Tragstruktur 3, eine Schlossaufnahme 4 für ein Kraftfahrzeugschloss 5 und eine Fensterführungsschiene 6 für die Führung einer anhebbaren und absenkbaren Fensterscheibe 7 aufweist. Die Fensterfiihrungsschiene 6 stellt einen Fensterführungskanal 6a bereit, in dem die Fensterscheibe 7 läuft. Die Fensterführungsschiene 6 stellt nur eine Seite einer beidseitigen Fensterführung 8 für die Fensterscheibe 7 bereit. Entsprechend ist auf der anderen Seite der Fensterscheibe 7 eine weitere Fensterführungsschiene 9 vorgesehen, die in der Zeichnung nur angedeutet ist und für die vorschlagsgemäße Lösung eine untergeordnete Rolle spielt. Die Tragstruktur 3 gewährleistet hier eine mechanische Verbindung zwischen der Fensterführungsschiene 6 und der Schlossaufnahme 4.

Die Fensterführung 8 führt die Fensterscheibe 7 über die beiden Fensterführungsschienen 6, 9 einerseits in einer seitlichen Richtung entlang der Scheibenfläche 7a der Fensterscheibe 7 und andererseits in einer Querrichtung senkrecht zu der Scheibenfläche 7a der Fensterscheibe 7.

Vorschlagsgemäß weist das Türmodul 3 im Bereich der Schlossaufnahme 4 eine Stützstruktur 10 mit mindestens einem Stützelement 11, hier und vorzugsweise genau einem Stützelement 11, auf. Das Stützelement 11 ist in der links oben angeordneten Detailansicht von Fig. 1 gezeigt.

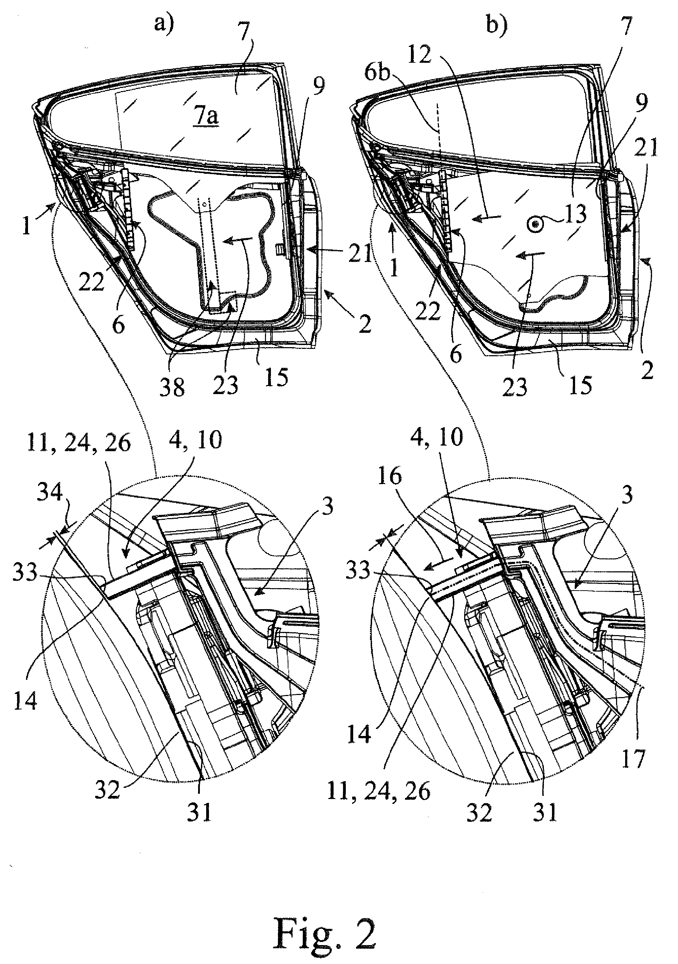

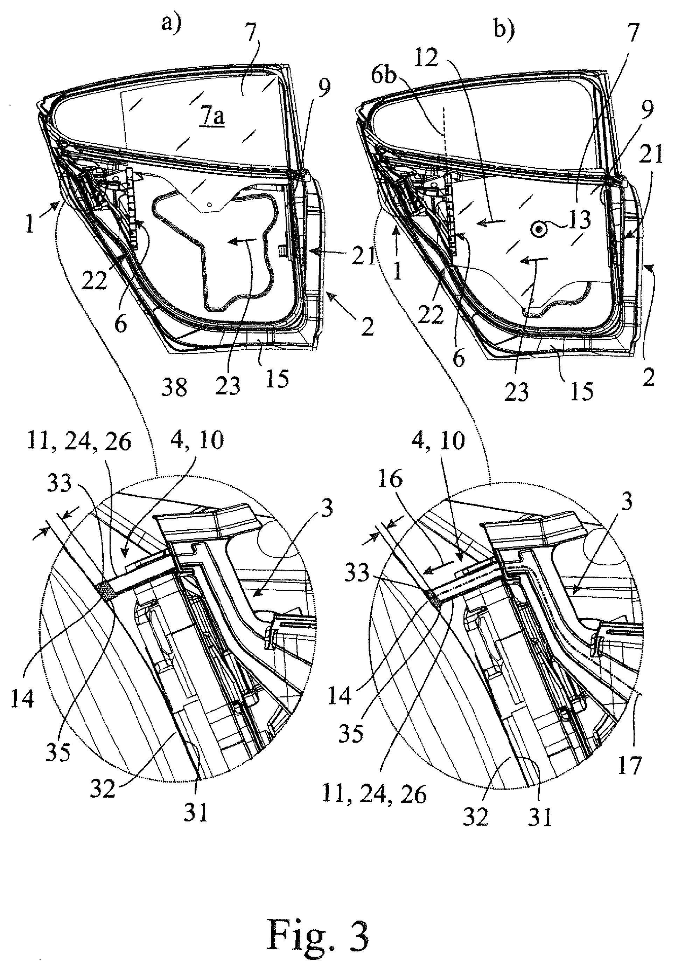

Während die Fensterführungsschiene 6 in Fig. 2a weitgehend unbelastet in der vollständig angehobenen Fensterscheibe 7 ist, ergibt sich gemäß Fig. 2b eine seitliche Belastung der Fensterführungsschiene 6 durch die vollständig abgesenkte Fensterscheibe 7 entlang deren Scheibenfläche 7a. Die Richtung dieser seitlichen Belastung ist in den Fig. 2b und 3b mit dem Bezugszeichen 12 angedeutet. Die seitliche Belastung der Fensterfiihrungsschiene 6 im vorliegenden Sinne ist wie oben angesprochen eine Belastung entlang der Scheibenfläche 7a und hier im wesentlichen zumindest in einer Komponente quer zu der Längserstreckung 6b der Fensterführungsschiene 6, wobei diese seitliche Belastung von der Fensterscheibe 7 auf die Fensterführungsschiene 6 aufgebracht wird. Eine entsprechende Belastung in entgegengesetzter Richtung ist auf die weitere Fensterführungsschiene 9 zu erwarten, was vorliegend allerdings nicht relevant ist.

Die oben angesprochene, seitliche Belastung der Fensterführungsschiene 6 geht in erster Linie zurück auf eine Kippneigung der Fensterscheibe 7 während der Fensterverstellung um eine Kippachse 13, die im Wesentlichen senkrecht zur Scheibenfläche 7a ausgerichtet ist. Diese Kippneigung ergibt sich in erster Linie durch eine ungleichmäßige Führung der Fensterscheibe 7 durch die beiden Fensterführungsschienen 6, 9, die wiederum auf Fertigungstoleranzen, Verschleiß, Verschmutzung o. dgl. zurückgehen kann.

Wesentlich ist nun, dass die seitliche Belastung der Fensterführungsschiene 6 durch die Fensterscheibe 7 entlang deren Scheibenfläche 7a zumindest zum Teil über das Stützelement 11 an einer Stützfläche 14 eines Türinnenblechs 15 der Kraftfahrzeugtür 2 mit einer Abstützkraft 16 am Kraftfahrzeugschloss 5 vorbei abstützbar ist. Dies bedeutet, dass der Kraftfluss 17 der Abstützkraft 16 am Kraftfahrzeugschloss 5 vorbeiläuft. Dies umfasst vorzugsweise auch eine Anordnung, bei der der Kraftfluß am Kraftfahrzeugschloss 5 vorbeiläuft und in ein mit dem Türinnenblech 15 verbundenes Flanschblech für das Kraftfahrzeugschloss 5 eingeleitet wird, was mit keiner mechanischen Belastung der Schlosskomponenten einhergeht. Der abstützende Eingriff zwischen dem Stützelement 11 und der Stützfläche 14 lässt sich jeweils der Detaildarstellung von Fig. 2b und Fig. 3b entnehmen.

Der über das Türmodul 1 verlaufende Kraftfluss 17 ist in Fig. 2b und Fig. 3b in gestrichelter Linie angedeutet. Hier wird besonders deutlich, dass der Kraftfluss 17 der Abstützkraft 16 am Kraftfahrzeugschloss 5 vorbeiläuft. Dabei sind vernachlässigbare Einflüsse wie Reibung o. dgl. unberücksichtigt geblieben. Aus diesen Darstellungen ergibt sich, dass eine mechanische Belastung des Kraftfahrzeugschlosses 5 durch die Abstützkraft 16 nicht stattfindet.

Die Kraftfahrzeugtür 2 weist neben dem Türinnenblech 15 eine Türaußenhaut 18 auf, die in Fig. 1 lediglich angedeutet ist.

Es wurde schon darauf hingewiesen, dass das Türmodul 1 für die Aufnahme ganz unterschiedlicher Funktionseinheiten wie des Kraftfahrzeugschlosses 5 ausgelegt sein kann. Solche Funktionseinheiten können beispielsweise auch der Lagerbügel eines Türaußengriffs, ein Türinnengriff, ein Fensterheber o. dgl. sein.

Die Befestigung des Türmoduls 1 am Türinnenblech 15 kann auf unterschiedliche Arten vorgesehen sein. Hier und vorzugsweise ist es so, dass die Fcnsterführungsschiene 6 und damit das gesamte Türmodul 1 über zwei Schraubdome am Türinnenblech 15 befestigt ist, deren jeweilige Längserstreckung 19, 20 in Fig. 1 lediglich angedeutet ist. Dadurch ist die Lagerung des Türmoduls 1 am Türinnenblech 15 zwar bestimmt. Allerdings bewirkt ein Absenken der Fensterscheibe 7 durch die hohen dort wirkenden Kräfte eine elastische Verformung von Teilen des Türmoduls 1, so dass die vorschlagsgemäße Abstützung der Fensterführungsschiene 6 zum Tragen kommt.

Fig. 1 zeigt, dass sich die vorschlagsgemäße Kraftfahrzeugtür 2 zwischen einer vorderen Stirnfläche 21 und einer hinteren Stirnfläche 22 in einer Längsrichtung 23 erstreckt, wobei die Abstützkraft 16 zumindest eine Kraftkomponente in Längsrichtung 23 der Kraftfahrzeugtür 2 aufweist. Dies ist den Darstellungen gemäß Fig. 2 und Fig. 3 zu entnehmen. In besonders bevorzugter Ausgestaltung verläuft die Abstützkraft 16 insgesamt im Wesentlichen in Längsrichtung 23 der Kraftfahrzeugtür 2.

Jedenfalls die hintere Stirnfläche 22 der Kraftfahrzeugtür 2, die vom Türinnenblech 15 gebildet wird, verläuft zumindest abschnittsweise im Wesentlichen quer zu der Türaußenhaut 18. Dies ist in Fig. 2 dargestellt. Hier und vorzugsweise ist es so, dass eine Scharnieranordnung für das Verschwenken der Kraftfahrzeugtür 2 an der vorderen Stirnfläche 21 angeordnet ist, während das oben angesprochene Kraftfahrzeugschloss 5 an der hinteren Stirnfläche 22 angeordnet ist.

Fig. 1 zeigt weiter, dass die Schlossaufnahme 4 selbst die Stützstruktur 10 bereitstellt. Denkbar ist aber auch, dass die Schlossaufnahme 4, insbesondere einstückig, in die Stützstruktur 10 übergeht.

Im Einzelnen weist die Schlossaufnahme 4 mindestens ein Aufnahmeelement 24, 25, hier und vorzugsweise zwei Aufnahrneelemente 24, 25, für einen haltenden Eingriff mit dem Kraftfahhrzeugschloss 5 auf. Dabei ist es ganz allgemein so, dass die Aufnahmeelemente 24, 25 jeweils eine Aufnahmeschiene 26, 27 umfassen. Die Aufnahmeelemente 24, 25, hier die Aufnahmeschienen 26, 27, dienen wie oben angedeutet dem haltenden Eingriff mit dem Kraftfahrzeugschloss 5. Vorliegend steht das in Fig. 1 obere Aufnahmeelement 24, also die obere Aufnahmeschiene 26, im Vordergrund.

Das Kraftfahrzeugschloss 5 weist ein Mitnehmerelement 28 auf, das in haltenden Eingriff mit dem Aufnahmeelement 24, hier mit der Aufnahmeschiene 26, bringbar ist. Damit ergibt sich vorliegend eine Nut-Feder-Verbindung zwischen dem Kraftfahrzeugschloss 5 und dem Türmodul 1. Zusätzlich ist das Aufnahmeelement 24 mit einer Rastanordnung, hier einem Rasthaken 29 ausgestattet, der zur Herstellung eines rastenden Eingriffs mit einem Rastabsatz 30 am Kraftfahrzeugschloss 5 zusammenwirkt. Die Aufnahmeschiene 26 ist vorzugsweise entlang der der Abstützkraft 16 ausgerichtet, so dass sich eine Entkopplung zwischen Kraftfahrzeugschloss 5 und Schlossaufnahme 4 in Richtung der Abstützkraft 16 ergibt.

Von besonderer Bedeutung ist vorliegend, dass das Aufnahmeelement 24, hier die Aufnahmeschiene 26, gleichzeitig das Stützelement 11 der Stützstruktur 10 bereitstellt. Grundsätzlich kann es auch vorgesehen sein, dass eine Verlängerung des Aufnahmeelements 24 das Stützelement 11 der Stützstruktur 10 bereitstellt. Ferner kann es vorgesehen sein, dass alternativ oder zusätzlich das weitere Aufnahmeelement 25 das Stützelement 11 oder ein weiteres Stützelement der Stützstruktur 10 bereitstellt. Fig. 1 zeigt, dass für die Realisierung der Stützstruktur 10 kein zusätzliches konstruktives Element vorgesehen sein muss, so dass die vorschlagsgemäße Lösung, wie oben angesprochen, eine kompakte und einfache konstruktive Ausgestaltung ermöglicht.

Eine besonders kostengünstige Realisierung des Türmoduls 1 ergibt sich dadurch, dass hier und vorzugsweise mindestens ein Abschnitt des Türmoduls 1 als einstückiges Kunststoffteil ausgestaltet ist. Dabei ist dieser mindestens eine Abschnitt des Türmoduls 1 weiter vorzugsweise im Kunststoff-Spritzgießverfahren hergestellt. In besonders bevorzugter Ausgestaltung ist jedenfalls die Schlossaufnahme 4 als solche als einstückiges Kunststoffteil ausgestaltet. Weiter vorzugsweise ist die Tragstruktur 3 zusammen mit der Schlossaufnahme 4 als einstückiges Kunststoffteil ausgestaltet. Bei dem dargestellten und insoweit bevorzugten Ausführungsbeispiel ist es so, dass zumindest ein Grundkörper der Fensterführungsschiene 6, die Tragstruktur 3 und die Schlossaufnahme 4 zusammen als einstückiges Kunststoffteil ausgestaltet sind. Für den Fall, dass mehrere einstückige Kunststoffteile vorgesehen sind, ist es vorzugsweise vorgesehen, dass diese Kunststoffteile miteinander gekoppelt, insbesondere verklipst o. dgl. sind.

Der Anordnung der Stützfläche 14, über die die Abstützkraft 16 in das Türinnenblech 15 eingeleitet wird, kommt vorliegend ganz besondere Bedeutung zu. Vorzugsweise ist es so, dass im eingebauten Zustand das Kraftfahrzeugschloss 5, hier über ein Schließblech 31 des Kraftfahrzeugschlosses 5, mit einer Montagefläche 32 einer Stirnfläche, hier der hinteren Stirnfläche 22, der Kraftfahrzeugtür 2 in Eingriff steht, wobei diese Stirnfläche 22 die Stützfläche 14 für die Stützstruktur 10 bereitstellt. Wie den Darstellungen gemäß Fig. 2 und Fig. 3 zu entnehmen ist, stellt hier und vorzugsweise eine an die Montagefläche 32 angrenzende Fläche die Stützfläche 14 bereit. Dies ist insoweit vorteilhaft, als die Montagefläche 32 durch die hohen, vom Kraftfahrzeugschloss 5 aufzunehmenden Haltekräfte mechanisch stabil ausgestaltet sein muss, was für die vorschlagsgemäße Abstützung genutzt werden kann. Die Montagefläche 32 und die Stützfläche 14 sind vorzugsweise von im Wesentlichen gleicher Orientierung.

Weiter vorzugsweise liegt das Stützelement 11 für die vorschlagsgemäße Abstützung auf der Stützfläche 14 auf, ohne dass zusätzliche Maßnahmen zur Verbindung getroffen worden sind. Der Kraftschluss zwischen dem Stützelement 11 und der Stützfläche 14 ist dann also ausschließlich einseitig möglich. Dadurch besteht grundsätzlich die Gefahr der Entstehung von Klappergeräuschen, wenn die seitliche Belastung der Fensterführungsschiene 6 nur gering oder gar nicht vorhanden ist. Hierfür ist es vorzugsweise vorgesehen, dass an der Eingriffsfläche 33 des Stützelements 11 für den abstützenden Eingriff mit der Stützfläche 14 mindestens eine nicht dargestellte Schicht aus Dämpfungsmaterial vorgesehen ist. Solche Dämpfungsmaterialien finden beispielsweise bei Klappen wie einer Handschuhfachklappe Anwendung, um Klappergeräusche zu vermeiden. Beispielsweise kann es sich bei dem Dämpfungsmaterial um ein textiles Material, insbesondere um Filz, um ein Kunststoffinaterial, um ein Gummimaterial o. dgl. handeln. Grundsätzlich kann die mindestens eine Schicht aus dem Dämpfungsmaterial auch im Kunststoff-Spritzgießverfahren an das Stützelement 11 angespritzt sein.

Die Fig. 2 und 3 zeigen unterschiedliche Ausgestaltungen des vorschlagsgemäßen Türmoduls 1 in Bezug auf das Zusammenwirken des Stützelements 11 mit der Stützfläche 14.

Bei der in Fig. 2 dargestellten, bevorzugten Ausgestaltung ist es vorgesehen, dass ohne seitliche Belastung der Fensterführungsschiene 6 ein Spalt 34 zwischen der Stützstruktur 10 und der Stützfläche 14 verbleibt (Fig. 2a). Durch eine seitliche Belastung der Fensterführungsschiene 6, die in Fig. 2b mit dem Bezugszeichen 12 angedeutet ist, ist ein kraftschlüssiger Eingriff zwischen der Stützstruktur 10, hier dem Stützelement 11, und der Stützfläche 14 herstellbar (Fig. 2b).

Angesichts der Tatsache, dass die Fensterscheibe 7 im vollständig angehobenen Zustand (Fig. 2a) außer Eingriff von der Fensterführungsschiene 6 steht, verbleibt in diesem Zustand ein Spalt 34 zwischen der Stützstruktur 10 und der Stützfläche 14. Hieraus wird deutlich, dass die Stützstruktur 10, hier das Stützelement 11, des in Fig. 2 dargestellten Türmoduls 1 in besonders bevorzugter Ausgestaltung mit mindestens einer oben angesprochenen Schicht aus einem Dämpfungsmaterial ausgestattet sein sollte, um die Entstehung von Klappergeräuschen zu vermeiden.

Eine im Hinblick auf die Vermeidung von Klappergeräuschen besonders robuste Variante zeigt Fig. 3. Hier stehen die Stützstruktur 10 und die Stützfläche 14 in ständigem, hier und vorzugsweise kraftschlüssigem, Eingriff miteinander. Dies ergibt sich aus einer Zusammenschau der Fig. 3a, die den Zustand ohne seitliche Belastung der Fensterführungsschiene 6 zeigt, und der Fig. 3b, die den Zustand mit im vorliegenden Sinne seitlicher Belastung der Fensterführungsschiene 6 zeigt.

Für diesen ständigen Kraftschluss ist die Stützstruktur 10, hier das Stützelement 11, mit einem Einfederbereich 35 ausgestattet, der eine federelastische Nachgiebigkeit in Abstützrichtung aufweist. Dabei ist die Auslegung vorzugsweise so getroffen, dass der Einfederbereich 35 gegen seine federelastische Nachgiebigkeit in Abstützrichtung einfedern kann. Der Einfederbereich 35 ist bei dem in Fig. 3 dargestellten und insoweit bevorzugten Ausführungsbeispiel stets zumindest geringfügig eingefedert, woraus sich der resultierende, ständige Kraftschluss zwischen der Stützstruktur 10 und der Stützfläche 14 ergibt.

Der Einfederbereich 35 der Stützstruktur 10 kann an ganz unterschiedlichen Stellen angeordnet sein. Hier und vorzugsweise umfasst das Stützelement 11 der Stützstruktur 10 den Einfederbereich 35, wie der Darstellung gemäß Fig. 3 zu entnehmen ist. In besonders bevorzugter Ausgestaltung stellt der Einfederbereich 35 auch die Eingriffsfläche 33 der Stützstruktur 10 für den abstützenden Eingriff mit der Stützfläche 14 bereit. Dadurch wird der Entstehung von Klappergeräuschen zusätzlich entgegengewirkt.

Grundsätzlich kann der Einfederbereich 35 an irgendeiner Stelle im Kraftfluss 17 der Abstützkraft 16 liegen. Beispielsweise kann der Einfederbereich 35 entfernt von dem Stützelement 11 an der Tragstruktur 3, beispielsweise an den in Fig. 1 gezeigten Armen 36, 37 der Tragstruktur 3, angeordnet sein. Ganz generell ist es denkbar, dass der Einfederbereich 35 durch eine gezielte Schwächung der Tragstruktur 3 realisiert ist.

Im einfachsten Fall ist es jedoch so, dass der Einfederbereich 35 als Puffer aus einem federelastischen Material, hier und vorzugsweise aus einem Gummimaterial, aus einem Kunststoffmaterial o. dgl. ausgestaltet sein. Grundsätzlich ist hier wiederum ein Anspritzen des Puffers an das Türmodul 1 im Übrigen im Kunststoff-Spritzgießverfahren denkbar. Alternativ kann es auch vorgesehen sein, dass der Einfederbereich 35 durch eine Federanordnung aus einem Federelement oder mehreren Federelementen gebildet ist.

Die Fensterscheibe 7 ist hier und vorzugsweise motorisch verstellbar. Hierfür ist der Fensterscheibe 7 vorzugsweise ein Fensterheberantrieb 38 zugeordnet. Weiter vorzugsweise ist der Fensterheberantrieb 38 einsträngig ausgestaltet. Dies bedeutet, dass der Fensterheberantrieb 38 die Antriebskraft über einen einzigen Antriebsstrang in die Fensterscheibe 7 einleitet. Das ist zwar kostengünstig, begünstigt aber die oben angesprochene Kippneigung der Fensterscheibe 7. Insoweit ist die vorschlagsgemäße Lösung, die ja eine hohe Robustheit gegenüber einer solchen Kippneigung aufweist, hier besonders vorteilhaft. Grundsätzlich kann es aber auch vorgesehen sein, dass der Fensterheberantrieb 38 mehrsträngig gestaltet ist und die Antriebskraft über mehrere Antriebsstränge in die Fensterscheibe 7 einleitet.

Nach einer weiteren Lehre, der eigenständige Bedeutung zukommt, wird eine Kraftfahrzeugtür 2 mit einem Türinnenblech 15 und mit einem oben erläuterten, vorschlagsgemäßen Türmodul 1 als solche beansprucht. Auf alle Ausführungen zu dem vorschlagsgemäßen Türmodul 1, die geeignet sind, die Kraftfahrzeugtür 2 als solche zu erläutern, darf verwiesen werden.

## Patentansprüche

1. Türmodul (1) für den Einbau in eine Kraftfahrzeugtür (2), wobei das Türmodul (1) eine Schlossaufnahme (4) für ein Kraftfahrzeugschloss (5) und eine Fensterführungsschiene (6) für die Führung einer anheb- und absenkbaren Fensterscheibe (7) aufweist,
**dadurch gekennzeichnet,**
**dass** das Türmodul (1) im Bereich der Schlossaufriahme (4) eine Stützstruktur (10) mit mindestens einem Stützelement (11) aufweist und dass im eingebauten Zustand eine seitliche Belastung der Fensterführungsschiene (6) durch die Fensterscheibe (7) entlang deren Scheibenfläche (7a) zumindest zum Teil über das Stützelement (11) an einer Stützfläche (14) eines Türinnenblechs (15) der Kraftfahrzeugtür (2) mit einer Abstützkraft (16) am Kraftfahrzeugschloss (5) vorbei abstützbar ist.

2. Türmodul nach Anspruch 1, **dadurch gekennzeichnet, dass** sich die Kraftfahrzeugtür (2) zwischen einer vorderen Stirnfläche (21) und einer hinteren Stirnfläche (22) in einer Längsrichtung (23) erstreckt und dass die Abstützkraft (16) eine Kraftkomponente in Längsrichtung der Kraftfahrzeugtür (2) aufweist, vorzugsweise, dass die Abstützkraft (16) im Wesentlichen in Längsrichtung (2) der Kraftfahrzeugtür (2) verläuft.

3. Türmodul nach Anspruch 1 oder 2, **dadurch gekennzeichnet, dass** die Schlossaufnahme (4) die Stützstruktur (10) bereitstellt oder, insbesondere einstückig, in die Stützstruktur (10) übergeht.

4. Türmodul nach einem der vorhergehenden Ansprüche, **dadurch gekennzeichnet, dass** die Schlossaufnahme (4) mindestens ein Aufnahmeelement (24, 25), insbesondere mindestens eine Aufnahmeschine (26, 27), für einen insbesondere rastenden Eingriff mit dem Kraftfahrzeugschloss (5) aufweist und dass das Aufnahmeelement (24, 25) oder eine Verlängerung des Aufnahmeelements (24, 25) das Stützelement (11) der Stützstruktur (10) bereitstellt.

5. Türmodul nach einem der vorhergehenden Ansprüche, **dadurch gekennzeichnet, dass** mindestens ein Abschnitt des Türmoduls (1) als einstückiges Kunststoffteil ausgestaltet ist, vorzugsweise, dass mindestens ein Grundkörper der Fensterfiihrungsschiene (6) und die Schlossaufnahme (6) zusammen mit einer Tragstruktur (3) als einstückiges Kunststoffteil ausgestaltet sind.

6. Türmodul nach einem der vorhergehenden Ansprüche, **dadurch gekennzeichnet, dass** im eingebauten Zustand das Kraftfahrzeugschloss (5), insbesondere über ein Schließblech (31), mit einer Montagefläche (32) einer Stirnfläche (21) der Kraftfahrzeugtür (2) in Eingriff steht und dass die Stirnfläche (21) die Stützfläche (14) für die Stützstruktur (10) bereitstellt, vorzugsweise, dass eine an die Montagefläche (32) angrenzende Fläche die Stützfläche (14) bereitstellt.

7. Türmodul nach einem der vorhergehenden Ansprüche, **dadurch gekennzeichnet, dass** an der Eingriffsfläche (33) des Stützelements (11) für den abstützenden Eingriff mit der Stützfläche (14) mindestens eine Schicht aus Dämpfungsmaterial, vorzugsweise aus einem textilen Material, aus einem Kunststoffmaterial, aus einem Gummimaterial o. dgl., vorgesehen ist.

8. Türmodul nach einem der vorhergehenden Ansprüche, **dadurch gekennzeichnet, dass** ohne seitliche Belastung der Fensterführungsschiene (6) durch die Fensterscheibe (7) ein Spalt (34) zwischen der Stützstruktur (10) und der Stützfläche (14) verbleibt und dass durch eine seitliche Belastung der Fensterführungsschiene (6) unter einem Schließen des Spalts (34) ein kraftschlüssiger Eingriff zwischen Stützstruktur (10) und Stützfläche (14) herstellbar ist.

9. Türmodul nach Anspruch 8, **dadurch gekennzeichnet, dass** die Fensterscheibe (7) im vollständig angehobenen Zustand außer Eingriff von der Fensterführungsschiene (6) oder nur mit einem Endabschnitt der Fensterführungsschiene (6) in Eingriff mit der Fensterführungsschiene (6) steht und dadurch zwischen der Stützstruktur (10) und der Stützfläche (14) ein Spalt (34) verbleibt.

10. Türmodul nach einem der vorhergehenden Ansprüche, **dadurch gekennzeichnet, dass** die Stützstruktur (10) und die Stützfläche (14) in ständigem, insbesondere kraftschlüssigem, Eingriff miteinander stehen und dass das Türmodul (1) hierfür einen Einfederbereich (35) von federelastischer Nachgiebigkeit aufweist.

11. Türmodul nach Anspruch 10, **dadurch gekennzeichnet, dass** das Stützelement (11) der Stützstruktur (10) den Einfederbereich (35) umfasst, vorzugsweise, dass der Einfederbereich (35) die Eingriffsfläche (33) der Stützstruktur (10) für den abstützenden Eingriff mit der Stützfläche (14) bereitstellt.

12. Türmodul nach Anspruch 10 oder 11, **dadurch gekennzeichnet, dass** der Einfederbereich (35) als Puffer aus einem federelastischen Material, insbesondere aus einem Gummimaterial, einem Kunststoffmaterial o. dgl., ausgestaltet ist.

13. Kraftfahrzeugtür mit einem Türinnenblech (15) und mit einem Türmodul (1), wobei das Türmodul (1) eine Schlossaufnahme (4) für ein Kraftfahrzeugschloss (5) und eine Fensterfiihrungsschiene (6) für die Führung einer anheb- und absenkbaren Fensterscheibe (7) aufweist,
**dadurch gekennzeichnet,**
**dass** das Türmodul (1) im Bereich der Schlossaufnahme (4) eine Stützstruktur (10) mit mindestens einem Stützelement (11) aufweist und dass eine seitliche Belastung der Fensterführungsschiene (6) durch die Fensterscheibe (7) entlang deren Scheibenfläche (7a) zumindest zum Teil über das Stützelement (11) an einer Stützfläche (14) eines Türinnenblechs (15) der Kraftfahrzeugtür (2) mit einer Abstützkraft (16) am Kraftfahrzeugschloss (5) vorbei abstützbar ist.

14. Kraftfahrzeugtür nach Anspruch 13, **gekennzeichnet durch** die Merkmale des kennzeichnenden Teils eines oder mehrerer der Ansprüche 1 bis 12.
